Europäisches Patentamt

(19) **European Patent Office**

Office européen des brevets

(11) Numéro de publication: **0 246 953**
**B1**

(12) **FASCICULE DE BREVET EUROPEEN**

(45) Date de publication du fascicule du brevet:
**07.11.90**

(21) Numéro de dépôt: **87401078.8**

(22) Date de dépôt: **14.05.87**

(51) Int. Cl.⁵: **F16K 11/10**, F16K 31/365,
B60C 23/00

(54) Valve pneumatique pilotée pour la commande à distance du gonflage ou du degonflage d'une capacité.

(30) Priorité: **16.05.86 FR 8607029**

(43) Date de publication de la demande:
**25.11.87 Bulletin 87/48**

(45) Mention de la délivrance du brevet:
**07.11.90 Bulletin 90/45**

(84) Etats contractants désignés:
**DE GB IT**

(56) Documents cités:
**EP-A- 0 164 916**
**FR-A- 2 568 345**
**GB-A- 2 022 525**
**US-A- 2 634 781**
**US-A- 2 693 841**
**US-A- 4 498 515**

(73) Titulaire: **ETAT-FRANCAIS représenté par le DELEGUE GENERAL POUR L'ARMEMENT (DPAG), Bureau des Brevets et Inventions de la Délégation Générale pour l'Armement 26, Boulevard Victor, F-75996 Paris Armées(FR)**

(72) Inventeur: **Boulicault, Jean-Michel, Noailly, F-46640 Saint-Germain-Lespinasse(FR)**

## Description

La présente invention concerne le domaine technique du contrôle à distance du gonflage ou du dégonflage d'une capacité à partir d'un fluide gazeux sous pression et elle vise, plus particulièrement, le contrôle à distance du gonflage du pneumatique d'une roue véhicule automobile.

Dans le domaine d'application préféré ci-dessus, on sait qu'il est parfois utile de pouvoir contrôler à distance la pression de gonflage des pneumatiques des roues d'un véhicule, de manière à pouvoir adapter la portance de ces derniers en fonction de l'état du sol sur lequel le véhicule se déplace. Ceci est, en particulier, le cas des véhicules tous terrains qui doivent pouvoir progresser dans les meilleures conditions sur des sols durs, caillouteux, voire meubles, se succédant, sans que le conducteur soit astreint à interrompre sa progression pour effectuer, de façon manuelle, lorsque le véhicule est à l'arrêt, une adaptation de la pression de gonflage des différents pneumatiques.

Cette application n'est évidemment donnée qu'à titre d'exemple, car, dans de nombreux autres domaines, il s'avère également utile, sinon nécessaire, de pouvoir adapter à distance la pression de gonflage d'une capacité quelconque.

Pour résoudre le problème ci-dessius, la technique antérieure n'offre que peu de solutions.

L'une d'elles comprend une sorte de clapet capable, dans une position de repos, de fermer un circuit de circulation entre la capacité et une source de pression de fluide disponible.

Dans le cas où il est souhaité procéder au gonflage de la capacité, le clapet est commandé contre l'action d'un ressort de rappel, de manière à ouvrir le circuit de circulation.

Dans le cas où il est souhaité procéder à un dégonflage partiel de la capacité, un fluide sous pression est appliqué pour soulever le clapet et la source de distribution du fluide sous pression est isolée pour maintenir le clapet ouvert pendant le temps nécessaire pour produire une décompression lente, par l'intermédiaire d'un détendeur, du fluide initialement confiné dans la capacité.

Une telle installation nécessite un circuit de pilotage à distance particulièrement compliqué qui devient, d'autant plus complexe, lorsqu'il est nécessaire de pouvoir piloter à distance une ou plusieurs capacités, comme cela est le cas dans l'application aux véhicules automobiles.

Outre cet inconvénient, il convient de noter que la phase de dégonflage implique un temps de transit important qui est établi par l'intermédiaire d'une installation complexe, pilotée à distance par un circuit de commande logique cher et fragile.

Le brevet US-A 2 634 781 décrit par exemple un dispositif pour la commande à distance du gonflage et du dégonflage d'un pneumatique, dont la structure complexe nécessite la présence de deux conduits d'arrivée distincts pour piloter le gonflage et le dégonflage avec deux seuils de pression différents.

Dans l'application particulière au domaine technique visé, la technique antérieure ne propose pas une installation satisfaisante, étant donné que chaque capacité, constituée par une roue, doit, nécessairement, être isolée de l'installation de pilotage par un joint tournant qui est maintenu en pression pendant toute la durée de la phase de dégonflage.

Un tel joint tournant est donc sollicité de façon intense en rotation et en maintien de pression, de sorte que la ou les garnitures de friction, assurant la fonction d'étanchéité tournante, subissent des contraintes importantes et sont incapables de fournir un service fiable.

Un tel inconvénient est, bien entendu, rédhibitoire dans le cas d'application à des véhicules tous terrains devant être utilisés de façon intense.

Dans le cas d'application à de tels véhicules, la technique antérieure, impliquant une phase de dégonflage simultanée et relativement lente des roues, ne contribue pas non plus à rendre satisfaisante la technique de pilotage à distance de la pression de gonflage des pneumatiques.

La présente invention vise à remédier aux inconvénients ci-dessus en proposant une nouvelle valve pneumatique pilotée, pour la commande à distance du gonflage ou du dégonflage d'une capacité quelconque et, plus particulièrement, d'un pneumatique de véhicule.

L'objet de l'invention est de proposer une valve pneumatique de réalisation facile, peu onéreuse et d'une fiabilité certaine, pouvant être aisément adaptée sur tout véhicule automobile, sans présenter de sensibilité particulière à la force centrifuge.

Un autre objet de l'invention est d'offrir une valve pneumatique pilotée capable d'assurer l'isolation de la capacité sans astreindre, dans le cas d'application visé, le joint tournant à une contrainte permanente, de manière à disposer d'un ensemble apte à présenter une efficacité et fiabilité certaines dans le temps.

Un autre objet de l'invention est de proposer une nouvelle valve pneumatique pilotée, pouvant être commandée en phase de gonflage ou de dégonflage par une seule voie d'asservissement rendant plus aisée et plus simple l'exécution du joint tournant devant être prévu, dans le cas d'application aux pneumatiques des roues d'un véhicule automobile.

Un autre objet de l'invention est de proposer une valve pneumatique pilotée pouvant être adaptée très facilement aux systèmes de contrôle les plus simples, tels que ceux à commande directe par électrovannes et boutons poussoirs ou aux systèmes plus compliqués, tels que ceux à présélection des pressions, à contrôle statistique des pressions et/ou à détection et signalisation d'une capacité percée.

Un autre objet de l'invention est de proposer une valve pneumatique pilotée qui soit exempte de risques de gommage, de colmatage ou d'obstruction dans le temps.

Pour atteindre l'objetiv ci-dessus, l'objet de l'invention est caractérisé en ce qu'il est constitué par une valve pneumatique pilotée pour la commande à distance du gonflage et du dégonflage d'une capacité, étant constituée par deux corps dits respectivement de gonflage et de dégonflage, de conformations sensiblement identiques disposés côte à côte, délimitant deux cavités, dites respectivement d'admission et d'échappement, caractérisée en ce que chaque cavité est divisée entre deux chambres par une membrane déformable élastiquement, les cavités communiquant entre elles par deux alésages coaxiaux, pratiqués centralement dans leur fond et qui constituent une intercommunication qui forme dans les cavités deux sièges pour deux clapets asservis travaillant opposition, chaque membrane étant associée au clapet correspondant et destinée à coopérer avec le siège d'appui du clapet, l'interconnexion étant en relation, entre les sièges, avec un canal de liaison, défini par des gorges ménagées dans les plans de joints des corps, vers un puits de raccordement avec la capacité, défini par les corps, la cavité d'admission étant divisée par une membrane en une chambre d'admission en relation par un canal de liaison avec un puits de raccordement à une installation de pilotage, et une chambre d'amortissement contenant le clapet, la cavité d'échappement étant divisée par une membrane en une chambre d'échappement en relation avec le milieu ambiant par des trous de mise à l'air libre, et en un chambre de dépression contenant le clapet correspondant et communiquant par un conduit avec le puits de raccordement à l'installation de pilotage, les deux clapets étant asservis élastiquement en fermeture et pilotés en ouverture respectivement par un fluide sous pression amené dans la chambre d'admission par le puits de raccordement à l'installation de pilotage et par une dépression établie à partir du même puits de raccordement.

Diverses autres caractéristiques ressortent de la description faite ci-dessous en référence aux dessins annexés qui montrent, à titre d'exemple non limitatif, une forme de réalisation de l'objet de l'invention.

La figure 1 est une vue schématique illustrant un exemple d'application de l'objet de l'invention.

La figure 2 est une élévation latérale prise sensiblement à plus grande échelle selon la ligne II–II de la figure 1.

Les figures 3 et 4 sont des coupes-élévations prises, à plus grande échelle, respectivement selon les lignes III–III et IV–IV de la figure 2.

Les figures 5 et 6 sont des coupes-élévations analogues à la figure 3 illustrant deux autres phases particulières de fonctionnement de l'objet de l'invention.

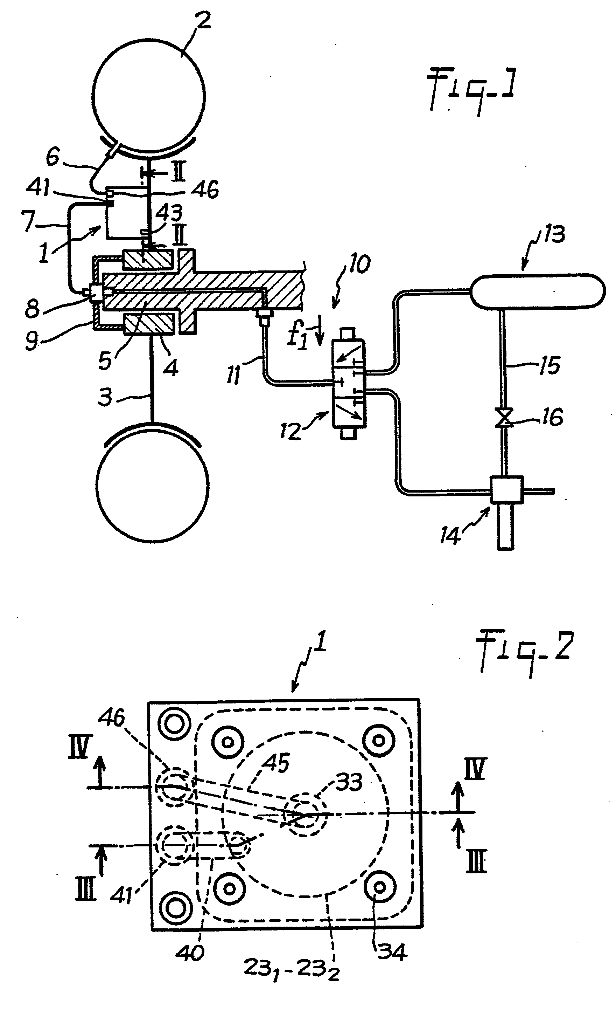

La figure 1 illustre un exemple d'application préféré de la valve pneumatique pilotée selon l'invention. Dans cet exemple, la valve, désignée par la référence 1, est appliquée au contrôle de la pression du pneumatique 2 d'une roue 3 d'un véhicule automobile, non représenté. Selon l'illustration schématique, la roue 3 est montée par un moyeu 4 sur un axe de roulement ou fusée 5 pouvant correspondre, indifféremment, à un train moteur ou porteur et/ou directeur avant ou arrière d'un véhicule. Dans cette application, la valve 1 est adaptée sur la roue 3, de manière à être reliée par une canalisation 6 au pneumatique 2 et par une canalisation 7 à un joint tournant 8 porté par une structure appropriée 9 en bout de l'axe 5. Le joint tournant 8 est raccordé à une installation de pilotage 10 comprenant une ligne 11 de circulation de fluide sous pression entre le joint tournant 8 et un distributeur 12, du type à tiroir, par exemple à trois positions. Le distributeur 12 est conçu pour permettre, soit l'isolation de la ligne 11, comme dans la position illustrée à la fig. 1, soit le raccordement de cette dernière à une source de distribution de fluide sous pression 13 ou à une source d'aspiration ou de mise en dépression 14. Selon le schéma illustré par la fig. 1, la source 13 est constituée par un accumulateur ou une bouteille de réserve d'air comprimé, mais il va de soi qu'une disposition équivalente pourrait être adoptée en remplaçant la bouteille par un compresseur ou analogue. La source de mise en dépression 14 peut être constituée de nombreuses façons différentes, de manière à pouvoir mettre la ligne 11 en dépression relative. A titre d'exemple, la source 14 peut être constituée par une trompe à vide susceptible d'être alimentée par l'intermédiaire de la source 13 au moyen d'une canalisation 15 contrôlée par un robinet 16.

Il va de soi que l'installation décrite ci-dessus n'est donnée qu'à titre d'exemple, car des circuits plus complexes, à même d'assumer d'autres fonctions, peuvent également être prévus. Il peut, également, être envisagé de réaliser une telle installation pour le pilotage à distance de chaque roue individuellement d'un véhicule automobile ou d'un groupe de ces roues ou, encore, de la totalité de ces dernières.

La valve pneumatique pilotée, illustrée plus en détail aux fig. 2 à 4, est constituée par l'association de deux corps $20_1$ et $20_2$, respectivement de gonflage et de dégonflage. Ces deux corps sont, pour la plus grande partie de leur structure, réalisés de façon identique et pour cette raison, on ne décrit dans un premier temps que les éléments constitutifs du corps $20_1$, étant entendu que les mêmes éléments du corps $20_2$ sont désignés par les mêmes références affectées de l'indice 2. Le corps $20_1$ est constitué par deux demi-corps $21_1$ et $22_1$, en toute matière appropriée, assemblés face contre face et usinés pour délimiter ensemble une cavité $23_1$. Les demi-corps $21_1$ et $22_1$ sont réalisés pour pincer, par leur face en regard délimitant la cavité $23_1$, une membrane $24_1$ déformable élastiquement divisant la cavité en deux chambres respectivement $25_1$ et $26_1$.

La chambre $25_1$ contient un clapet $27_1$ associé à la membrane $24_1$ et asservi à l'action d'un organe élastique $28_1$. Le clapet $27_1$ est ainsi poussé en permanence contre un siège $29_1$ faisant saillie à partir du fond de la chambre $26_1$. Le siège $29_1$ borde l'orifice d'un alésage $30_1$ pratiqué dans le demi-corps $21_1$ selon une direction perpendiculaire au plan de la membrane, de manière à traverser entièrement le demi-corps.

Les corps $20_1$ et $20_2$ sont disposés en vis-à-vis par leur interface $31_1$, $31_2$, de telle manière que les clapets $27_1$ et $27_2$ soient placés en opposition pour fermer les deux sièges extrêmes $29_1$ et $29_2$ correspondant aux orifices d'une intercommunication 33 constituée par les alésages $30_1$ et $30_2$ coaxiaux. Le

maintien des corps $20_1$ et $20_2$ dans cette position particulière peut être assuré par l'intermédiaire de vis 34 servant, éventuellement aussi, à établir la liaison entre les demi-corps $21_1$ et $22_1$, d'une part et, $21_1$ et $22_2$.

Le corps $20_1$ et $20_2$ forment ainsi un ensemble compact qui peut être monté sur la roue 3, de préférence par fixation à partir de l'une des faces des corps $20_1$ ou $20_2$ opposée aux faces de plan de joint $31_1$, $31_2$.

La chambre $25_1$ du corps $20_1$ constitue, pour des raisons qui ressortent de ce qui suit, une chambre d'amortissement, alors que la chambre $26_1$ est qualifiée de chambre d'admission. Cette chambre communique avec un canal de liaison 40, ménagé au moins dans le corps $20_1$ pour déboucher dans un puits 41 percé dans les deux corps $20_1$ et $20_2$. Le canal de liaison 40 peut être constitué par des gorges ou des saignées qui sont exécutées simultanément dans les demi-corps $21_1$ et $21_2$, à partir des faces de plan de joint $31_1$ et $31_2$. Le puits de raccordement 41 est ménagé en partie dans le corps $20_2$ pour être raccordé par un conduit 42 à la chambre $25_2$, qualifiée dans ce qui suit de chambre de dépression. La chambre $26_2$ du corps $20_2$ est qualifiée de chambre d'échappement et communique avec le milieu environnant par une batterie de trous d'échappement 43.

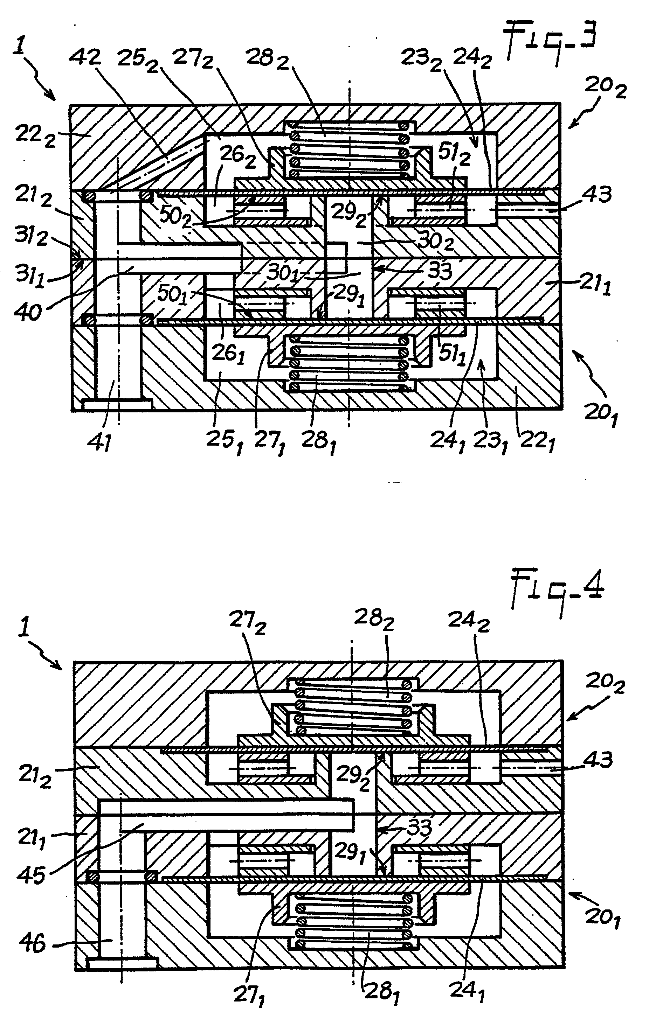

Comme cela ressort de la fig. 4, l'intercommunication 33 communique, par un canal de liaison 45, avec un puits 46 ménagé dans le corps $20_1$ parallèlement au puits 41. Le canal de liaison 45 peut être formé par des gorges ou rainures pratiquées selon les mêmes coordonnées dans les plans de joint $31_1$ et $31_2$.

La valve décrite ci-dessus est montée sur la roue 3, de manière que le puits 41 soit raccordé à la canalisation 7, alors que le puits 46 est raccordé à la canalisation 6 dans l'exemple de montage illustré par la fig. 1.

Les ressorts $28_1$ et $28_2$ sont choisis pour développer sur les clapets $27_1$ et $27_2$ une force supérieure à celle devant régner dans le pneumatique 2.

La fig. 1 montre un état de repos dans lequel le distributeur 12 ferme la ligne 11 isolant ainsi la valve pneumatique pilotée 1. Les clapets $27_1$ et $27_2$, poussés par les organes élastiques $28_1$ et $28_2$, occupent la position fermée, illustrée par la fig. 3. Les membranes $24_1$ et $24_2$ obturent les sièges $29_1$ et $29_2$. L'intercommunication 33 entre les chambres $26_1$ et $26_2$ est ainsi fermée, de sorte que le fluide sous pression, occupant le pneumatique 2, reste confiné dans ce pneumatique, sans avoir la possibilité d'emprunter le puits 46, le canal de liaison 45 et l'intercommunication 33 dont les orifices d'extrémité sont fermés.

La valve pneumatique pilotée constitue ainsi une sorte d'obturateur isolant le pneumatique 2 du joint tournant 8, lui-même isolé par le distributeur 12. Le joint tournant 8 est ainsi à même de travailler en rotation, sans être sollicité en pression, ce qui lui garantit un fonctionnement fiable dans le temps.

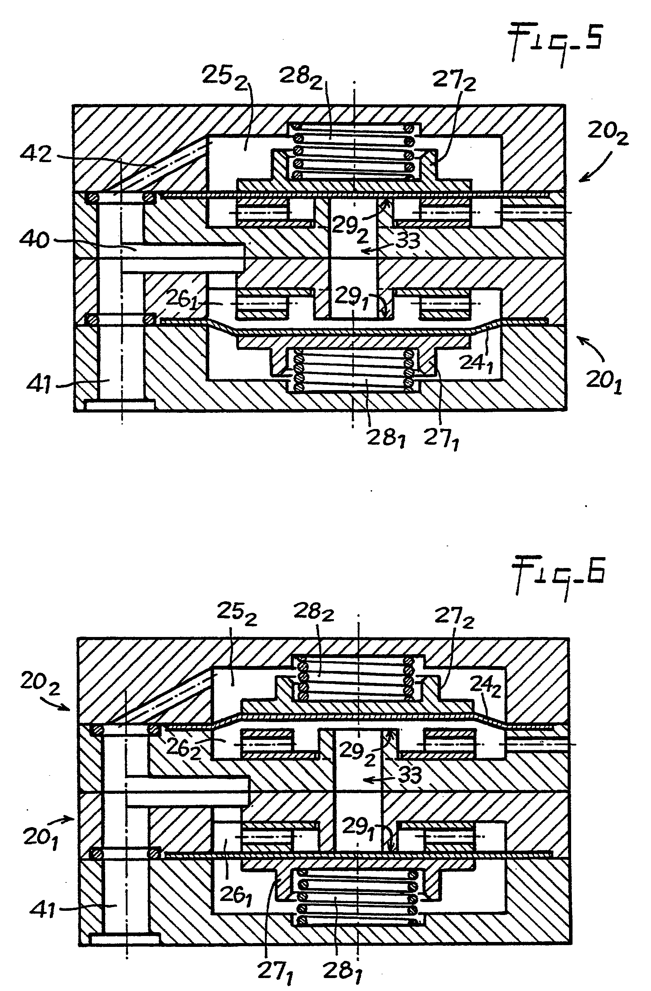

Lorsqu'il convient, pour une raison déterminée, de gonfler le pneumatique 2, le distributeur 12 est commandé en déplacement dans le sens de la flèche $f_1$ (fig. 1), de manière à établir la relation entre la source 13 et le puits 41. Le fluide sous pression, délivré par la source 13 emprunte alors le canal de liaison 40 pour pénétrer dans le chambre d'admission $26_1$, comme cela est illustré par la fig. 5. Simultanément, le fluide sous pression emprunte le conduit 42 pour pénétrer dans la chambre $25_2$ dans laquelle son action sur le clapet $27_2$ vient compléter l'action de l'organe élastique $28_2$. Le clapet $27_2$ est ainsi plus fortement encore appliqué sur le siège $29_2$ pour obturer l'orifice correspondant de l'intercommunication 33.

A l'opposé, le fluide sous pression, entrant dans la chambre d'admission $26_1$, repousse la membrane $24_1$ en sollicitant le clapet $27_1$ en ouverture contre l'action de l'organe élastique de rappel $28_1$. Le siège $29_1$ est ainsi ouvert, de sorte que le fluide sous pression peut emprunter l'intercommunication 33 et suivre le canal de liaison 45 puis le puits 46 pour emprunter la canalisation 6 et être délivré à l'intérieur du pneumatique 2.

Par la commande à distance du distributeur 12, il devient ainsi possible de commander le gonflage du pneumatique 2 jusqu'à un seuil de pression qui peut être déterminé ou apprécié par l'intermédiaire d'un capteur adapté sur la canalisation 6. Lorsque le seuil de gonflage est atteint, le distributeur 12 est ramené dans sa position de repos, telle qu'illustrée par la fig. 1, de sorte que l'organe élastique $28_1$ ramène le clapet $27_1$ et la membrane $24_1$ dans la position d'obturation du siège $29_1$ rétablissant les conditions de repos décrites ci-dessus.

Au cours de cette phase, on constate que le joint tournant 8 travaille en rotation et en sollicitation de pression. Toutefois, une telle double fonction est assumée pendant un laps de temps relativement court, étant donné qu'une phase de mise en pression du pneumatique 2 en cours de roulement du véhicule s'établit, généralement, pendant un temps bref. Le joint tournant 8 peut ainsi travailler dans les meilleures conditions possibles, sans être sollicité en permanence en rotation et en étanchéité.

Lorsque le pneumatique 2 doit être dégonflé, le distributeur 12 est déplacé à partir de sa position de repos, illustrée par la fig. 1, dans le sens inverse à celui de la flèche $f_1$, de manière à établir la communication entre la source de mise en dépression 14 et la ligne 11. La dépression créée s'établit à travers le joint tournant 8 et la canalisation 7 dans le puits 41 et, par conséquent, dans la chambre $26_1$. Cette dépression a pour effet de compléter l'action de l'organe élastique $28_1$ et, par conséquent, de plaquer plus fermement encore la membrane $24_1$ contre l'orifice du siège $29_1$ qui est ainsi plus fermement obturé.

La dépression, entretenue par la source 14, est également appliquée à la chambre $25_2$ en ayant pour effet de soulever le clapet $27_2$ contre l'action de l'organe élastique $28_2$. La membrane $24_2$ est ainsi décollée de l'orifice du siège $29_2$ qui établit la liaison entre l'intercommunication 33 et la chambre d'échappement $26_2$. Le fluide sous pression, contenu dans le pneumatique 2, peut ainsi s'échapper par la canalisation 6 pour traverser la valve 1 et être évacué dans le milieu environnant par les trous d'échappement 43. Le dégonflage ainsi obtenue s'établit de façon rapide, immédiate et efficace pour le pneumatique 2 qui est mis en ralation, sans présence de phase de détente intermédiaire, directement avec le milieu environnant, tant que le distributeur 12 établit la relation entre la valve 1 et la pompe à vide 14. Le fonctionnement de cette dernière dans l'exemple d'application peut résulter, comme dit précédémment, de l'ouverture du robinet 16.

Lorsque le dégonflage du pneu a atteint la limite souhaitée, le distributeur 12 est ramené dans sa position de repos selon la fig. 1, de sorte que la membrane $24_2$ est remenée en position de fermeture de l'orifice du siège $29_2$ par l'action de l'organe élastique $28_2$ repoussant le clapet $27_2$.

Selon un développement de l'invention, chaque chambre $26_1$, $26_2$ comporte, intérieurement, un rebord annulaire de butée $50_1$, $50_2$, constituant une butée d'appui permettant de limiter la course du clapet $27_1$ ou $27_2$. La hauteur du rebord $50_1$, $50_2$ est déterminée de manière à limiter l'écrasement de la membrane $24_1$ ou $24_2$ sur le siège correspondant, sous l'action de l'organe élastique $28_1$ ou $28_2$.

De préférence, le rebord $50_1$ ou $50_2$ est réalisé sous une forme annulaire et comporte des trous radiaux $51_1$ ou $51_2$. De préférence encore, chaque rebord annulaire de butée est constitué par une coupelle enfilée libre sur une cheminée tubulaire s'élevant à partir du fond correspondant de la chambre $26_1$, $26_2$ pour constituer le siège $29_1$ ou $29_2$.

La valve pneumatique selon l'invention est décrite en référence aux fig. 3 et 4 qui illustrent une forme préférée de réalisation. Il va de soi qu'une construction différente pourrait être adoptée. Par exemple, un montage différent des clapets pourrait être prévu, en les constituant sous la forme de pistons, de façon à établir l'effet de dépression par l'intermédiaire du conduit 42 en agissant dans la chambre arrière du piston constituant le clapet $27_2$.

Il pourrait également être prévu de grouper les corps $20_1$ et $20_2$ de façon différente pour fair travailler les clapets $27_1$ et $27_2$ selon des directions non obligatoirement coaxiales et selon des sens non obligatoirement opposés.

La chambre $25_1$ est dite d'amortissement, en ce sens que son volume fermé assume une fonction de matelas élastique évitant les battements de la membrane $24_1$ et assurant ainsi une fonction d'obturation-ouverture plus franche chaque fois qu'une commande à distance de gonflage de la roue 2 doit intervenir. Dans certains cas, il pourrait toutefois être prévu de relier la chambre $25_1$ au milieu ambiant par l'intermédiaire d'un ajutage calibré établissant un freinage ou une détente de l'air circulant entre cette chambre et le milieu ambiant ou inversement.

Il convient de noter qu'un montage de la valve sur une roue 3 est, de préférence, effectué pour que l'axe des organes élastiques $28_1$ et $28_2$ soit perpendiculaire au plan de roulement de la roue. Aussi, acune sollicitation par la force centrifuge ne peut modifier les caractéristiques de réponse des clapets $27_1$ et $27_2$.

## Revendications

1. Valve pneumatique pilotée pour la commande à distance du gonflage et du dégonflage d'une capacité, étant constituée par deux corps ($20_1$ et $20_2$) dits respectivement de gonflage et de dégonflage, de conformations sensiblement identiques disposés côte à côte, délimitant deux cavités ($23_1$ et $23_2$), dites respectivement d'admission et d'échappement, caractérisée en ce que chaque cavité ($23_1$ et $23_2$) est divisée entre deux chambres (25, 26) par une membrane (24) déformable élastiquement, les cavités communiquant entre elles par deux alésages (30) coaxiaux, pratiqués centralement dans leur fond et qui constituent une intercommunication (33) qui forme dans les cavités deux sièges ($29_1$ et $29_2$) pour deux clapets asservis ($27_1$ et $27_2$) travaillant en opposition, chaque membrane étant associée au clapet (27) correspondant et destinée à coopérer avec le siège d'appui (29) du clapet, l'interconnexion (33) étant en relation, entre les sièges (29), avec le canal de liaison (45), défini par des gorges (45) ménagées dans les plans de joints ($31_1$ et $31_2$) des corps ($20_1$ et $20_2$), vers un puits (56) de raccordement avec la capacité, défini par les corps, la cavité d'admission ($23_1$) étant divisée par une membrane ($24_1$) en une chambre d'admission ($26_1$) en relation par un canal de liaison (40) avec un puits (41) de raccordement à une installation de pilotage, et une chambre d'amortissement ($25_1$) contenant le clapet ($27_1$), la cavité d'échappement ($23_1$) étant divisée par une membrane ($24_2$) en une chambre d'échappement ($26_2$) en relation avec le milieu ambiant par des trous (43) de mise à l'air libre, et en une chambre de dépression ($25_2$) contenant le clapet ($27_2$) correspondant et communiquant par un conduit (42) avec le puits de (41) raccordement à l'installation de pilotage, les deux clapets ($27_1$ et $27_2$) étant asservis élastiquement en fermeture et pilotés en ouverture respectivement par un fluide sous pression amené dans la chambre d'admission ($26_1$) par le puits (1) de raccordement à l'installation de pilotage et par une dépression établie à partir du même puits de raccordement.

2. Valve pneumatique pilotée selon la revendication 1, caractérisée en ce que les chambres d'admission ($26_1$) et d'échappement ($26_2$) contiennent chacune un rebord annulaire ($50_1$, $50_2$) percé radialement entourant à distance le siège (29) et constituant une butée d'appui pour le clapet en position de fermeture.

3. Valve pneumatique pilotée selon la revendication 2, caractérisée en ce que le rebord annulaire ($50_1$, $50_2$) est formé par une coupelle centrée sur un siège cylindrique s'élevant à partir du fond de la chambre.

4. Application de la valve pneumatique pilotée selon l'une des revendications 1 à 3, à la commande à distance du gonflage-dégonflage d'un pneumatique de roue d'un véhicule automobile.

5. Application selon la revendication 4, caractérisée en ce qu'elle fait intervenir le montage de la valve (1) sur la roue (3), le raccordement du puits (46) en relation avec l'intercommunication (33) avec le pneumatique (2), le raccordement du puits (41) en relation avec la chambre d'admission (26₁), avec un raccord tournant (8) porte par l'axe (9) de support de roue, et la mise en œuvre d'une installation de pilotage (10) comprenant un distributeur (12) à trois positions interposé entre le raccord tournant (8), d'une part, et une source (13) de fluide sous pression et une source (14) de mise en dépression, d'autre part.

## Claims

1. A piloted pneumatic valve for remotely controlling the inflation and deflation a capacity consisting of two bodies ($20_1$ and $20_2$) called inflating body and deflating body respectively, of substantially identical configurations, disposed side by side, delimiting two cavities ($23_1$ and $23_2$) called inlet cavity and outlet cavity respectively, characterized in that each cavity ($23_1$ and $23_2$) is divided into two chambers (25, 26) by an elastically deformable diaphragm (24), said cavities communicating with each other via two coaxial holes (30) pierced centrally in their bottoms and constituting an intercommunication (33) which forms, in the cavities, two seats ($29_1$ and $29_2$) for two slaved check valves ($27_1$ and $27_2$) working in opposite directions, each diaphragm being associated with the corresponding check valve (27) and intended to cooperate with the check valve seat (29), the interconnection (33) being in relation, between the seats (29) with a communication channel (45) defined by grooves (45) recessed in the mating faces ($31_1$ and $31_2$) of the bodies ($20_1$ and $20_2$), toward a well (56) insuring connection with the capacity, defined by the two bodies, the inlet cavity ($23_1$) being divided by a diaphragm ($24_1$) into an inlet chamber ($26_1$), communicating, via a connecting channel (40) with a well (41) insuring connection with a control installation, and a damping chamber ($25_1$) containing the check valve ($27_1$), the outlet cavity ($23_1$) being divided by a diaphragm ($24_2$) into an outlet chamber ($26_2$) communicating with the surrounding medium through vent holes (43), and a vacuum chamber ($25_2$) containing the corresponding check valve ($27_2$) and communicating via a conduit (42) with the well (41) ensuring connection with the control installation, the two check valves ($27_1$ and $27_2$) being resepectively slaved elastically for closing and controlled for opening by a pressurized fluid brought into the inlet chamber ($26_1$) through the well (1) insuring connection with the control installation and through a vacuum created in the same connecting well.

2. A piloted pneumatic valve as described in claim 1, characterized in that the inlet chamber ($26_1$) and the outlet chamber ($26_2$) contain an annular rim each ($50_1$, $50_2$) pierced radially, surrounding at a distance the seat (29) and constituting a retainer for the puppet of the check-valve in closed position.

3. A piloted pneumatic valve as described in claim 2, characterized in that the annular rim ($50_1$, $50_2$) consists of a cup centered on a cylindrical seat rising from the bottom of the chamber.

4. An application of the piloted pneumatic valve as described in claims 1 to 3, to the remote control of the inflation-deflation of a motor vehicle wheel tire.

5. An application of the piloted pneumatic valve as described in claim 4, characterized by the fitting of the pneumatic valve (1) on the wheel (3), the connection of the well (46) communicating with the intercommunication (33) to the tire (2), the connection of the well (41) communicating with the inlet chamber ($26_1$) to a running joint (8) carried by the wheel axle (9), and by the use of a control installation (10) comprising a three-position distributor (12) interposed between the running joint (8), on the one hand, and a pressurized fluid source (13) and a depressurizing source (14), on the other hand.

## Patentansprüche

1. Gesteuertes Luftventil für das ferngesteuerte Auffüllen oder Entleeren eines Gefäßes, bestehend aus zwei beinahe gleich ausgelegten und nebeneinander angeordneten, für das Auffüllen bzw. Entleeren bestimmten Gehäusen ($20_1$ und $20_2$), die je einen Ein- bzw. Auslaßhohlraum ($23_1$ und $23_2$) abgrenzen, dadurch gekennzeichnet, daß jeder Hohlraum ($23_1$ und $23_2$) durch eine elastisch verformbare Membran (24) in zwei Kammern (25, 26) unterteilt wird, wobei die beiden Hohlräume miteinander über zwei zentrisch in deren Böden ausgeführte koaxiale Bohrungen (30) verbunden sind, die eine Verbindung (33) herstellen sowie in den beiden Hohlräumen zwei Sitze ($29_1$ und $29_2$) für zwei gesteuerte, in entgegengesetzter Richtung arbeitende Ventilklappen ($27_1$ und $27_2$) bilden, wobei jede Membran mit der entsprechenden Ventilklappe (27) vereinigt ist und mit dem Sitz (29) der Ventilklappe mitwirkt und wobei die Verbindung (33) zwischen den Ventilsitzen (29) mit einem aus den in den Teilungsebenen ($31_1$ und $31_2$) der Gehäuse ($20_1$ und $20_2$) gefrästen Rillen (45) entstehenden und einem in einer Anschlußschacht (46) des durch die Gehäuse bestimmten Gefäßes mündenden Kanal (45) in Verbindung steht, daß der Einlaß-Hohlraum ($23_1$) durch die Membran ($24_1$) in einer über den Kanal (40) mit der Anschlußschacht (41) einer Steuervorrichtung in Verbindung stehenden Einlaßkammer ($26_1$) einerseits und einer mit der Ventilklappe ($27_1$) entstehenden Dämpfungskammer ($25_1$) andererseits geteilt wird und daß der Auslaß-Hohlraum ($23_2$) durch die Membran ($24_2$) in einer über die Entlüftungsbohrungen (43) mit der Außenluft in Verbindung stehenden Auslaßkammer ($26_2$) einerseits und einer aus der Ventilklappe ($27_2$) bestehenden und über den Kanal (42) mit der Anschlußschacht (41) der Steuervorrichtung verbundenen Unterdruckkammer ($25_2$) andererseits geteilt wird, wobei die beiden Ventilklappen ($27_1$ und $27_2$) elastisch in Schließstellung zurückgestellt und durch ein in die Einlaßkammer ($26_1$) über die Anschlußschacht (41) der Steuervorrichtung einlaufendes Druckgas sowie durch einen in der selben Anschlußschacht erzeugten Unterdruck in Öffnungsstellung gebracht werden.

2. Gesteuertes Luftventil nach Anspruch 1, dadurch gekennzeichnet, daß die Ein- ($26_1$) bzw. Auslaßkammer ($26_2$) je um den Ventilsitz (29) mit einem ringförmigen Anschlag ($50_1$, $50_2$) bestückt sind, der mit radialen Bohrungen ($51_1$, $51_2$) versehen ist und

als Auflage für die Ventilklappe in deren Schließstellung dient.

3. Gesteuertes Luftventil nach Anspruch 2, dadurch gekennzeichnet, daß der ringförmige Anschlag ($50_1$, $50_2$) aus einer Tellerscheibe besteht, die zentrisch um den zylindrisch ausgeführten Ventilsitz gelagert ist.

4. Anwendung des Luftventils nach einem beliebigen Anspruch 1 bis 3 dem ferngesteuerten Einblasen von Luft in die Reifen bzw. Ablassen von Luft aus dem Reifen eines Straßenfahrzeuges.

5. Anwendung nach Anspruch 4, dadurch gekennzeichnet, daß sie den Einbau des Luftventils (1) auf dem Rad (3), den Anschluß der mit der inneren Verbindung (33) verbundenen Schacht (46) mit dem Reifen, den Anschluß der mit der Einlaßkammer ($26_1$) verbundenen Schacht (41) mit der Drehverbindung (8) der Radnabe (9) sowie den Einsatz einer Steuervorrichtung (10), die aus dem zwischen der Drehverbindung (8) einerseits und einer Druckgasquelle (13) sowie einer Unterdruckquelle (14) andererseits angeschlossenen Dreiwegventil (12) besteht, vorsieht.

Fig-1

Fig-2

Fig-3

Fig-4

EP 0 246 953 B1

Fig.5

$25_2$  $28_2$  $27_2$

42

40

41

$20_2$

$29_2$  33

$29_1$

$26_1$

$24_1$

$20_1$

$28_1$  $27_1$

Fig.6

$25_2$  $28_2$  $27_2$

$20_2$

$24_2$

$26_2$

$29_2$  33

$20_1$

$29_1$

41

$26_1$

$27_1$  $28_1$